# EUROPEAN PATENT SPECIFICATION

(11) **EP 2 904 874 B1**
(45) Date of publication and mention of the grant of the patent: **05.12.2018**
(21) Application number: 12783684.9
(22) Date of filing: 05.10.2012
(51) Int. Cl.: H04W 84/20, H04W 24/10, H04W 76/14, H04W 76/23, H04W 88/16

(54) **METHODS AND ARRANGEMENTS FOR NETWORK ASSISTED DEVICE-TO-DEVICE COMMUNICATION**
VERFAHREN UND ANORDNUNGEN FÜR EINE NETZWERKUNTERSTÜTZTE KOMMUNIKATION ZWISCHEN VORRICHTUNGEN
PROCÉDÉS ET AGENCEMENTS POUR UNE COMMUNICATION DE DISPOSITIF À DISPOSITIF ASSISTÉE PAR RÉSEAU

(43) Date of publication of application: 12.08.2015
(73) Proprietor: Telefonaktiebolaget LM Ericsson (publ), 164 83 Stockholm (SE)
(72) Inventor: DAHLMAN, Erik, SE-112 23 Stockholm (SE); FODOR, Gabor, S-165 52 Hässelby (SE); PARKVALL, Stefan, SE-167 57 Bromma (SE); WILHELMSSON, Leif, S-247 55 Dalby (SE); KLANG, Göran, S-122 32 Enskede (SE)
(74) Representative: Zacco Sweden AB
(86) International application number: PCT/SE2012/051069
(87) International publication number: WO 2014/054990

(56) References cited:
- EP-A2- 2 472 987
- WO-A1-2010/006649
- WO-A1-2011/085983
- WO-A1-2011/147462
- WO-A1-2012/071689
- GÃ BOR FODOR ET AL: "Design aspects of network assisted device-to-device communications", IEEE COMMUNICATIONS MAGAZINE, IEEE SERVICE CENTER, PISCATAWAY, US, vol. 50, no. 3, 1 March 2012 (2012-03-01), pages 170-177, XP011429640, ISSN: 0163-6804, DOI: 10.1109/MCOM.2012.6163598

## Description

### Technical Field

The present invention relates generally to the field of cellular network assisted device-to-device communication. More particularly, it relates to control of the device-to-device communication within a cluster of device-to-device communication enabled devices.

### Background

Device-to-Device (D2D) communication refers to direct communication between devices. In D2D communication, data to be transmitted from a first device to a second device is typically not relayed via any cellular network. Some examples of D2D communication of the prior art are Bluetooth communication, and Wireless Local Area Networks (WLAN) communication, e.g. according to Institute of Electrical and Electronics Engineers (IEEE) 802.11 family of standards.

Device-to-device communication may be applicable in various scenarios. One scenario is when a cellular radio access network is present, and able to set up a cellular connection between two devices. D2D communication may be a complement to the cellular communication in such scenarios.

There may be situations when D2D communication may provide better performance, e.g. in terms of better signal quality, higher bit rate, lower latency, etc, than cellular communication. This may be due to proximity between the devices and/or specific signaling gain of the D2D protocol.

In some situations, the network may have constraints, e.g. due to being heavily loaded, resulting in that a service cannot be provided at all using a network connection. Then, D2D communication would be an alternative.

There may also be situations when D2D communication may be preferred by the user of a device, e.g. due to billing costs.

D2D communication may improve spectrum efficiency and reduce the network load for the cellular network, since the D2D connection typically, but not necessarily, uses another spectrum range, e.g. an unlicensed spectrum, than the cellular network, which network typically uses licensed spectrum. Furthermore, since cellular communication uses an uplink-downlink pair for each of the two devices while a D2D connection would only use one link pair, spectrum efficiency is improved even if the D2D connection would use cellular spectrum resources. This is also true for network assisted D2D communication, where most of the data is transmitted over the D2D connection and only a small amount of information is transmitted over the network links.

D2D communication may be ad hoc or may be network assisted. For example, a cellular network may assist a D2D connection by establishing security of the D2D link(s) and/or partly or fully controlling the setup of the D2D connection(s), e.g. regarding device/peer discovery and resource allocation. A cellular network may also assist D2D communication by controlling the interference environment. For example, if using licensed operator's spectrum for the D2D communication, higher reliability can be provided than when operating in unlicensed spectrum. To assist the D2D connection, the network may also provide synchronization and/or partial or full Radio Resource Management (RRM). The RRM may e.g. comprise time and/or frequency resource allocation for the D2D communication.

In D2D communication scenarios, it is envisioned that there may be a large amount of D2D capable devices in vicinity to one another, e.g. in the area covered by a particular network node or in a smaller region. This allows for many possibilities for D2D link establishment, but the situation may also cause quite some interference generated by the D2D signaling and the network assistance signaling related thereto. Optimizing e.g. link performance and system performance in such scenarios is a complex task.

EP 2472987 A2 discloses inter-device communication between wireless user equipment (UE) devices in a wireless communications network. A call set-up function can be managed by a node in the wireless communications network, a network node outside of the wireless communications network or bv a distributed function shared between a network node and an ad-hoc group of UE devices in a local area that are capable of inter-device communications. WO 2010/006649 A1 discloses device-to-device communications in cellular systems wherein a portion of the terminal devices function as relay terminals for the other terminals to enable relayed communication links between the terminal devices and the base station through the relay terminals.

WO 2012/052911 A1 discloses an apparatus for mapping uplink control signals from devices by switching a transmission order in response to receiving a downlink control message, and by determining and sending a group-wise reply to the downlink control message from a plurality of devices which form a D2D cluster.

There is a need for methods and arrangements that improve link performance and system performance in cellular network assisted D2D communication scenarios.

### Summary

It should be emphasized that the term "comprises/comprising" when used in this specification is taken to specify the presence of stated features, integers, steps, or components, but does not preclude the presence or addition of one or more other features, integers, steps, components, or groups thereof.

It is an object of some embodiments to obviate at least some of the above disadvantages and to provide methods and arrangements that improve link performance and/or system performance in cellular network assisted D2D communication scenarios.

The invention is defined in the independent claims 1, 3, 8, 9 and 11 to 12. Embodiments of the invention are defined in the dependent claims. The embodiments and/or examples of the following description which are not covered by the appended claims are considered as not being part of the present invention.

According to a first aspect, this is achieved by a method for a first communication device, wherein the first communication device is adapted to perform cellular network assisted device-to-device communication and wherein a device-to-device communication cluster of a plurality of communication devices comprises the first communication device and one or more other communication devices. A specific one of the plurality of communication devices performs a network control signal gateway function for the device-to-device communication cluster. The network control signal gateway function comprises receiving downlink control signals from a network node of the cellular network, transmitting uplink control signals to the network node of the cellular network, and operating control signaling within the device-to-device communication cluster in association with the downlink and uplink control signals.

Operating control signaling within the device-to-device communication cluster in association with the downlink and uplink control signals may, for example, comprise operating all control signaling within the device-to-device communication cluster.

The method comprises deciding whether or not to switch the network control signal gateway function from the specific communication device to another communication device in the plurality of communication devices. The decision is based on at least one of link quality measurements of prospect communication links between the network node and the specific communication device and between the network node and the another communication device and link quality measurements of device-to-device communication links between the specific communication device and communication devices, other than the specific communication device, of the plurality of communication devices and between the another communication device and communication devices, other than the another communication device, of the plurality of communication devices.

A device-to-device communication cluster may have one or more communication devices performing the network control signal gateway function.

A communication link may refer to a one-directional communication link, such as a down-link (DL) or uplink (UL), or to a two-directional communication link.

A link quality may be measured in terms of one or more of a signal-to-noise ratio (SNR), a signal-to-interference ratio (SIR), a signal-to-noise-and-interference ratio (SNIR), a bit error rate (BER), a block error rate (BLER), a received signal strength indicator (RSSI), a reference signal received power (RSRP), a reference signal received quality (RSRQ), or similar. A link quality may also be defined in binary terms, for example, whether or not it is possible to set up the communication link.

The decision of the method according to the first aspect may comprise choosing to switch the network control signal gateway function to the another communication device if, for example, the another communication device is better suited than the specific communication device to receive and transmit network control signaling from and to the cellular network. For example, if the link quality measurement of the prospect communication link between the network node and the another communication device indicates a better quality than the link quality measurement of the prospect communication link between the network node and the specific communication device, then the another communication device, hereinafter also denoted the another device, may be considered better suited for this task than the specific communication device, hereinafter also denoted the specific device.

The decision of the method according to the first aspect may comprise choosing to switch the network control signal gateway function to the another device if, for example, the another device is best suited among the plurality of communication devices, hereinafter also denoted the plurality of devices, of the device-to-device communication cluster to receive and transmit network control signaling from and to the cellular network. For example, if the link quality measurement of the prospect communication link between the network node and the another communication device indicates a best quality among the link quality measurements of the prospect communication links between the network node and the communication devices, then the another device may be considered best suited for this task.

A better/best quality may, for example, comprise a higher/highest SNR, SIR, SNIR, RSSI, RSRP and/or RSRQ. Alternatively or additionally, a better/best quality may, for example, comprise a lower/lowest BER and/or BLER.

The decision of the method according to the first aspect may comprise choosing to switch the network control signal gateway function to the another device if, for example, the another device is better suited than the specific device to control all (or as many as possible) of the communication devices of the D2D communication cluster, e.g. to receive and transmit D2D control signaling from and to all (or as many as possible) of the communication devices of the cluster, excluding the another device.

The decision of the method according to the first aspect may comprise choosing to switch the network control signal gateway function to the another device if, for example, the another device is best suited among the plurality of communication devices of the D2D communication cluster to control all (or as many as possible) of the devices of the D2D communication cluster, e.g. to receive and transmit D2D control signaling from and to all (or as many as possible) of the communication devices of the cluster, excluding the another device.

For example, if the link quality measurement of the device-to-device communication links between the another communication device and the plurality of communication devices indicates a better/best quality, then the another device may be considered better/best suited for this task in comparison with the specific device. A better/best quality may, for example, comprise a higher/highest SNR, SIR, SNIR, RSSI, RSRP and/or RSRQ. Alternatively or additionally, a better/best quality may, for example, comprise a lower/lowest BER and/or BLER.

Alternatively or additionally, if the link quality measurement of the device-to-device communication links between the another communication device and the plurality of communication devices indicates that the another communication device can setup a communication link to all of the D2D communication devices, then the another device may be considered better suited for this task than the communication devices that cannot setup a communication link to all of the D2D communication devices. A better/best quality may, for example, comprise a higher/highest SNR, SIR, SNIR, RSSI, RSRP and/or RSRQ. Alternatively or additionally, a better/best quality may, for example, comprise a lower/lowest BER and/or BLER.

Combinations of the above example decision criteria are also possible, as well as introducing further criteria. For example, it may be decided to switch the gateway function to the another device if the another device has both a quality of the prospect communication link to the network node that is above a quality threshold and a possibility to connect to all of the D2D communication devices. In some embodiments, the decision to switch the gateway function may comprise determining which communication devices in the plurality of communication devices have a possibility to connect to all of the D2D communication devices, and selecting - among the determined communication devices - the another device as the device that has the best quality of the prospect communication link to the network node.

According to some embodiments, the first communication device may be the specific communication device. Thus, the decision is a centralized decision according to these embodiments. The specific device initially having the gateway function, gets measurement reports from all of the other communication devices and makes a decision to hand over the gateway function based on its own measurements and the reports. The reports may or may not be transmitted to all communication devices, (i.e. it may or may not be transmitted also to those communication devices that are not performing the gateway function, according to this embodiment.

In centralized decision embodiments, the method may further comprise transmitting a gateway function switching instruction to the another communication device.

According to some embodiments, the method may further comprise receiving, from the another device, a switching instruction response message to the gateway function switching instruction. If the switching instruction response message comprises an acknowledgement, the method may comprise sending a gateway function change request to the network node and receiving, from the network node, a change request response message to the gateway function change request. If the change request response message comprises an acknowledgement, the method may comprise forwarding the acknowledgement to the another device and releasing the gateway function. After taking over the gateway function, the another device may broadcast gateway function information to the communication devices of the cluster.

According to some embodiments, the first communication device may be the another communication device. Thus, the decision is a de-centralized decision according to these embodiments.

In de-centralized decision embodiments, the method may further comprise transmitting a link quality measurement report to the one or more other communication devices, indicating a result of the link quality measurement of the prospect communication link between the network node and the first communication device. Thus, all communication devices get measurement reports from all of the other communication devices in the D2D communication cluster and a device that determines that it is the best suited device makes a decision to take over the gateway function based on its own measurements and the reports.

In de-centralized decision embodiments, the method may further comprise transmitting a gateway function switching request to the specific communication device.

According to some embodiments, the method may further comprise receiving, from the specific device, a switching request response message to the gateway function switching request. If the switching request response message comprises an acknowledgement, the method may comprise taking over the gateway function and broadcasting gateway function information to the communication devices of the cluster.

In some embodiments, the method further comprises acquiring link quality measurements of the prospect communication links by performing a link quality measurement of the prospect communication link between the network node and the first communication device, and receiving a respective prospect communication link quality measurement report from at least one of the one or more other communication devices.

In some embodiments, the method further comprises acquiring link quality measurements of the device-to-device communication links by performing link quality measurements of the device-to-device communication links between the first communication device and the one or more other communication devices, and receiving a respective device-to-device communication links quality measurement report from at least one of the one or more other communication devices.

Deciding whether or not to switch the network control signal gateway function from the specific communication device to the another communication device may, according to some embodiments, comprise deciding to switch the network control signal gateway function to the another communication device if the link quality measurement of the prospect communication link between the network node and the another communication device indicates an extreme value among the link quality measurements of prospect communication links. An extreme value may, for example, be a maximum or minimum value.

In some embodiments, one or more border conditions may be applied before searching for extreme values. For example, devices that cannot have a D2D connection to all communication devices in the cluster may be omitted from the extreme value evaluation.

Thus, deciding whether or not to switch the network control signal gateway function from the specific communication device to the another communication device may, in some embodiments, comprise deciding to switch the network control signal gateway function to the another communication device if the device-to-device communication links quality measurement report of the another communication device indicates that the another device has a device-to-device communication link to each communication device, other than the another communication device, of the plurality of communication devices.

In some embodiments, deciding whether or not to switch the network control signal gateway function from the specific communication device to the another communication device may be further based on an operational capability of the another communication device. The operational capability of the another communication device may, for example, comprise one or more of a computational power and, when the another communication device is a user equipment (UE) according to a cellular communication standard, a user equipment (UE) capability of the another communication device. The UE capability may, for example, comprise which communication bands the communication device is able to support. For other example aspects of UE capability, please refer to 3^{rd} generation partnership program (3GPP) standard specifications.

A second aspect is a method of a communication device adapted to perform cellular network assisted device-to-device communication, wherein a device-to-device communication cluster of a plurality of communication devices comprises the communication device. The method comprises receiving downlink control signals from a network node of the cellular network, transmitting uplink control signals to the network node of the cellular network, and operating control signaling within the device-to-device communication cluster in association with the downlink and uplink control signals. The communication device of the second aspect may, for example, be the specific communication device of the first aspect.

Operating control signaling within the device-to-device communication cluster in association with the downlink and uplink control signals may, for example, comprise operating all control signaling within the device-to-device communication cluster.

A third aspect provides a computer program product comprising a computer readable medium, having thereon a computer program comprising program instructions. The computer program is loadable into a data-processing unit and is adapted to cause execution of the method according to any of the first and second aspects when the computer program is run by the data-processing unit.

According to a fourth aspect, an arrangement is provided for a first communication device adapted to perform cellular network assisted device-to-device communication. A device-to-device communication cluster of a plurality of communication devices comprises the first communication device and one or more other communication devices, and a specific one of the plurality of communication devices performs a network control signal gateway function for the device-to-device communication cluster. The network control signal gateway function comprises reception of downlink control signals from a network node of the cellular network, transmission of uplink control signals to the network node of the cellular network, and operation of control signaling within the device-to-device communication cluster in association with the downlink and uplink control signals.

Operation of control signaling within the device-to-device communication cluster in association with the downlink and uplink control signals may, for example, comprise operation of all control signaling within the device-to-device communication cluster.

The arrangement comprises a decision unit adapted to decide whether or not to switch the network control signal gateway function from the specific communication device to another communication device in the plurality of communication devices. The decision is based on at least one of link quality measurements of prospect communication links between the network node and the specific communication device and between the network node and the another communication device, and link quality measurements of device-to-device communication links between the specific communication device and communication devices, other than the specific communication device, of the plurality of communication devices and between the another communication device and communication devices, other than the another communication device, of the plurality of communication devices.

The arrangement may, according to some embodiments, further comprise a measurement unit and a receiver. The measurement unit may be adapted to perform a link quality measurement of a prospect communication link between the network node and the first communication device and/or to perform link quality measurements of the device-to-device communication links between the first communication device and the one or more other communication devices. The receiver may be adapted to receive a respective link quality measurement report from at least one of the one or more other communication devices and/or to receive a respective device-to-device communication links quality measurement report from at least one of the one or more other communication devices.

According to some embodiments, the arrangement may further comprise a transmitter adapted to transmit a gateway function switching instruction to the another communication device.

Alternatively or additionally, the arrangement may further comprise a transmitter adapted to transmit a gateway function switching request to the specific communication device. The transmitter may be further adapted to transmit a link quality measurement report to the one or more other communication devices, indicating a result of the link quality measurement of the prospect communication link between the network node and the first communication device.

A fifth aspect is a communication device comprising the arrangement according to the fourth aspect.

A sixth aspect provides a communication device adapted to perform cellular network assisted device-to-device communication and to be comprised in a device-to-device communication cluster of a plurality of communication devices.

The communication device comprises a receiver adapted to receive downlink control signals from a network node of the cellular network, a transmitter adapted to transmit uplink control signals to the network node of the cellular network, and a controller adapted to operate control signaling within the device-to-device communication cluster in association with the downlink and uplink control signals.

In some embodiments, the communication device may be adapted to operate all control signaling within the device-to-device communication cluster in association with the downlink and uplink control signals.

The first and second aspects may be combined according to some embodiments, and features of the sixth aspect may be combined with the fourth and/or fifth aspects.

In some embodiments, the fourth and fifth aspects may additionally have features identical with or corresponding to any of the various features as explained above for the first aspect.

An advantage of some embodiments is that a dynamic switching of the network control signal gateway function is provided. This ensures that the network control signal gateway function is held by the most suitable device at all times, and thereby, link performance and system performance, including network system performance as well as D2D communication cluster system performance, e.g. due to reduced communication error signaling, is improved.

Another advantage of some embodiments is that only one communication device of the D2D communication cluster needs to be connected to the network. Thus, a device that is out-of-coverage of the cellular network may, despite this, be a member of the network assisted D2D communication cluster.

Yet another advantage of some embodiments is that, since only one device of the D2D communication cluster needs to be connected to the network, the amount of control signaling for the network assistance provided to the D2D communication cluster is reduced. Thereby, the network system performance is improved.

A further advantage of some embodiments is that, since the network control signal gateway function is assigned to a specific device, the other communication devices do not need to listen to messages from the network node at all. Thus, there is no need for other communication devices to inform the specific device that they do not receive messages from the network node as is disclosed, for example, in WO 2012/052911 A1. Thus D2D communication cluster system performance is improved due to reduced signaling.

### Brief Description of the Drawings

Further objects, features and advantages will appear from the following detailed description of embodiments, with reference being made to the accompanying drawings, in which:
Fig. 1 is a schematic drawing of a network assisted D2D communication scenario according to some embodiments;
Fig. 2 is a flowchart illustrating example method steps according to some embodiments;
Fig. 3 is a flowchart illustrating example method steps according to some embodiments;
Fig. 4A is a flowchart illustrating example method steps according to some embodiments;
Fig. 4B is a signaling diagram illustrating various signaling according to some embodiments;
Fig. 5A is a flowchart illustrating example method steps according to some embodiments;
Fig. 5B is a signaling diagram illustrating various signaling according to some embodiments;
Fig. 6 is a block diagram illustrating an example arrangement according to some embodiments; and
Fig. 7 is a schematic drawing illustrating a computer program product according to some embodiments.

### Detailed Description

In the following, embodiments will be described where cellular network assisted device-to-device (D2D) communication is implemented by use of a master-slave concept. The master will also be referred to as a network control signal gateway or as performing (or having) a network control signal gateway function, or gateway function for short.

For network assisted D2D communication, the involved devices are typically under network control. Such network control may, for example, provide a controlled interference environment. The network control may also ensure that a D2D communication link can coexist properly e.g. with conventional cellular communication and/or with other D2D communication links. Thus, devices involved in D2D communication typically need to maintain a, permanently or periodically reestablished, connection towards the network to receive or request control messages and actions. For example, the devices involved D2D communication may be terminals, e.g. user equipments (UEs), adapted for use in a cellular communication network.

One way to achieve this is that the network treats the devices involved in D2D communication as separate entities, and maintains dedicated logical control channels towards each one of the devices. A problem with this approach, in particular if many devices are involved in the D2D communication, is that the signaling overhead between the network and the devices gets unnecessarily large.

According to embodiments presented herein, two or more devices capable of D2D communication may be organized in a D2D communication cluster, or D2D cluster for short. From a control perspective and network management perspective, control signaling may be minimized if the network treats the devices belonging to a D2D cluster as one entity, e.g. one logical entity, instead of a group of individual devices. Thus, the network may manage the D2D cluster using the same methods and procedures as it would use for controlling individual conventional devices. That is, an abstraction may be created that allows the composition of terminals within a D2D cluster and relations between terminals within a D2D cluster to be hidden from the network.

One way to realize such an abstraction is to enable the devices forming a cluster to be coordinated, e.g. from a control perspective, by letting at least one device within the D2D cluster act as an anchor point towards the network. The role performed when acting as an anchor point is also referred to as the gateway function or the master function and the device acting as an anchor point is also referred to as the master or master device in the following.

Thus, in a D2D cluster, one device will occupy, e.g. by assignment or by arbitration, a master function and the other devices in the D2D cluster will occupy a slave function. In these embodiments, the network control of the D2D communication of the cluster, e.g. D2D link control, is communicated to the master only. Thus, the master may relay or otherwise communicate control messages from the network node - via which control messages related to the D2D communication are exchanged between the cellular network and the communication devices comprised in the D2D cluster - and/or potentially from other sources, to the other devices of the D2D cluster. Any control signaling related to the D2D communication - may it be control messages from the network node or control messages internal to the cluster - reaches the slave devices via the master device. From a network perspective the network anchoring point, i.e. the master device, is the interface towards the D2D cluster.

This approach minimizes, or at least decreases, the signaling overhead. The slaves, i.e. the slave devices, may or may not be connected to a respective network node by means of regular cellular communication. Thus, user plane communication between a slave device and the cellular network may be performed by regular cellular communication, where the slave device is connected to and communicates directly with a respective network nodes of the cellular network. Alternatively, a slave device may have no direct communication with any network nodes of the cellular network (e.g. may be out-of-range of the cellular network). Whether or not a slave device is connected (or has the possibility to connect) to the cellular network only becomes relevant if the slave device is to take over a master role.

For example, any network control related to a slave may be forwarded by the master using the D2D communication link. Similarly, information from the slave to the network may be relayed via the master. In some embodiments, the master may not relay messages between the other communication devices and the cellular network. The master function may include the possibility to actively interpret the control messages from the cellular network, and also from the other devices in the D2D cluster, and decide how to operate based on the interpretation. Thus, the master may relay control messages, block control messages, or design new control messages based on the messages received from the cellular network and/or the other communication devices.

More generally, the master device may receive and transmit D2D control signaling from and to a network node of the cellular network, and may operate the control signaling within the device-to-device communication cluster.

Typically, the cellular network control of the D2D cluster may comprise controlling the communication devices of the D2D cluster individually or jointly. For example, an individual allowed transmit power may be given for each communication device or all communication devices in a D2D cluster may be limited by the same allowed transmit power. In another example, resources for the D2D communication links of the D2D cluster may be allocated individually for each device by the cellular network, or the whole D2D cluster may be allocated D2D resources and it may be delegated to the master to decide how to divide the allocated resources between the communication devices of the D2D cluster.

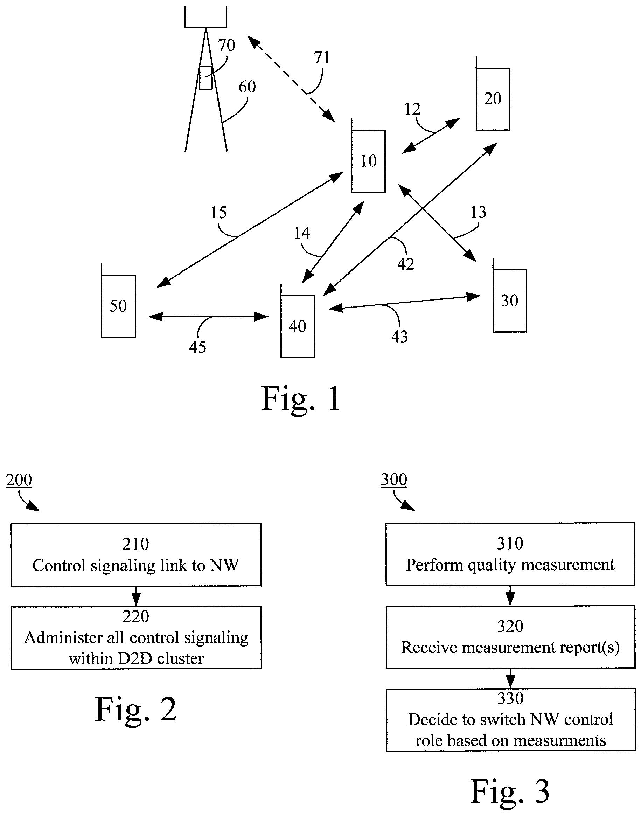

Figure 1 illustrates a network assisted D2D communication scenario according to some embodiments. A number of D2D communication enabled devices 10, 20, 30, 40, 50 are comprised in a D2D cluster.

Within the D2D cluster, some devices have a D2D communication link between them and some don't. Device 10 is connected to devices 20, 30, 40 and 50 via respective links 12, 13, 14 and 15. Device 20 is connected to devices 10 and 40 via respective links 12 and 42. Device 30 is connected to devices 10 and 40 via respective links 13 and 43. Device 40 is connected to devices 10, 20, 30 and 50 via respective links 14, 42, 43 and 45. Device 50 is connected to devices 10 and 40 via respective links 15 and 45. The device 10 currently has the master function. Thus, device 10 has a control link 71 to a network node 70 which is comprised in a network site 60.

Figure 2 illustrates an example method 200 of a master device having the gateway function according to some embodiments. The method 200 starts in step 210 where cellular network control signaling related to the D2D communication is exchanged between the master device and a network node. The operation in step 210 may include transmission and/or reception of control messages to and from the network node. Example control signaling includes, but is not limited to, power control messages, resource allocation messages and scheduling messages, and interference control related messages. In step 220, the D2D related control signaling within the cluster is administered by the master device, for example as has been described above. It is to be noted that operations of steps 210 and 220 may take place in parallel or even in an opposite order.

The approach with a master role being in charge of all or at least some control communication between the cellular network and the D2D cluster and controlling all or at least some control signaling within the D2D cluster typically results in a reduction of signaling overhead between the cellular network and the D2D cluster.

Thus, the control plane signaling overhead within cellular network base stations and cells supporting network assisted D2D communication may be reduced. From a control perspective all devices in a D2D cluster will, according to some embodiments, belong to the same network node, e.g. a base station, although the data plane connections from individual communication devices may be directed towards different network nodes or base stations depending on the most advantageous individual radio conditions of the communication devices.

Furthermore, communication is perfectly possible even when some of the communication devices of the D2D cluster are out-of-coverage of the cellular network.

The master role within D2D clusters may, according to some embodiments, be exposed to a dynamic role arbitration approach.

In some embodiments, the master role may be determined and assigned by the cellular network at the D2D cluster connection setup and establishment. Various criteria may be considered in the selection of master, e.g. radio conditions or device specific parameters and properties, for example reported received signal strength, SNIR, capabilities of the individual device's hardware, etc. For example, the master role may be determined based on information regarding which communication device of the D2D cluster has the best radio link towards a respective serving network node, based on current load of the respective network node, or based on other conditions. The current load of the respective network node may, for example, be relevant for determining which device should be assigned the master role if some devices of the D2D cluster are connected to the cellular network via different network nodes. The other conditions may include a fairness criterion. For example, if the respective network nodes belong to different operators, a criterion may be to assign master roles within a D2D cluster so that each operator gets an approximately equal average amount of traffic related to the D2D cluster.

If conditions, e.g. radio and/or load conditions, of at least one of the network connection and the respective D2D connections within the cluster changes the master role may be switched, e.g. because the initial or previous choice of master has become suboptimal, resulting potentially in degraded or even lost ability to communicate control messages between the D2D cluster and the network node or base station. This decision may be initiated by the cellular network or by one of the communication devices of the D2D cluster as will be seen in the following. Thus, dynamic role arbitration is introduced among the communication devices of the D2D cluster.

The dynamic master selection may, for example, be based on which communication device currently has the best possibility to maintain the cellular network connection. Other criteria may, additionally or alternatively, be applied in the selection process as will be seen in the description of various embodiments.

Within the D2D cluster the mechanism controlling the dynamic role arbitration may be either centralized or decentralized. For example, the communication devices may measure various, possibly predefined, quality indicators, e.g. received signal strength, SNIR, etc, and share reports on the results of the measurements with its D2D cluster peers, i.e. the other communication devices in the D2D cluster. For a centralized approach, the master may process the measurements of the D2D cluster members, i.e. the other communication devices in the D2D cluster, and take a decision whether to hand over the master role. For a decentralized approach, all communication devices within the D2D cluster may receive and process the measurements performed by the other members in the D2D cluster and, given that the own situation is the most advantageous, inform the other members in the cluster, or only the master, and take over the master role.

Through the dynamic arbitration approach, the network-to-D2D-cluster control channel connectivity quality may be optimized. The control task and control signaling load of the base stations or network nodes managing D2D clusters may be reduced. In addition, the autonomy of a D2D cluster may increase since the base station or network node does not have to keep detailed track of the status of the individual communication devices in the D2D cluster.

Figure 3 illustrates an example method 300 of a master or slave device of a D2D cluster according to some embodiments. The method 300 may or may not be combined with the method 200 of Figure 2 according to various embodiments.

In step 310, the communication device performing method 300 performs link quality measurements. The link quality measurements may relate to a prospect communication link, i.e. a prediction of a future quality of an existing (i.e. already set up) communication link or a quality estimation of a communication link before link setup, between the communication device and a network node. Alternatively or additionally, the link quality measurements may relate to one or more D2D communication links between the device and other communication devices of the D2D cluster.

In step 320, the device performing method 300 receives link quality measurement reports. The reports may relate to a prospect communication link between the reporting device and a network node. Alternatively or additionally, the report may relate to one or more D2D communication links between the reporting device and other communication devices of the D2D cluster.

The device performing the method then decides, in step 330, whether or not the master role should be switched to another device. The decision may be based on the link quality measurements of prospect communication links between the network node and the communication devices of the D2D cluster. Alternatively or additionally, the decision may be based on the link quality measurements of device-to-device communication links between the communication devices of the D2D cluster.

Various decision criteria may be applicable in step 330, for example, those described in the summary above.

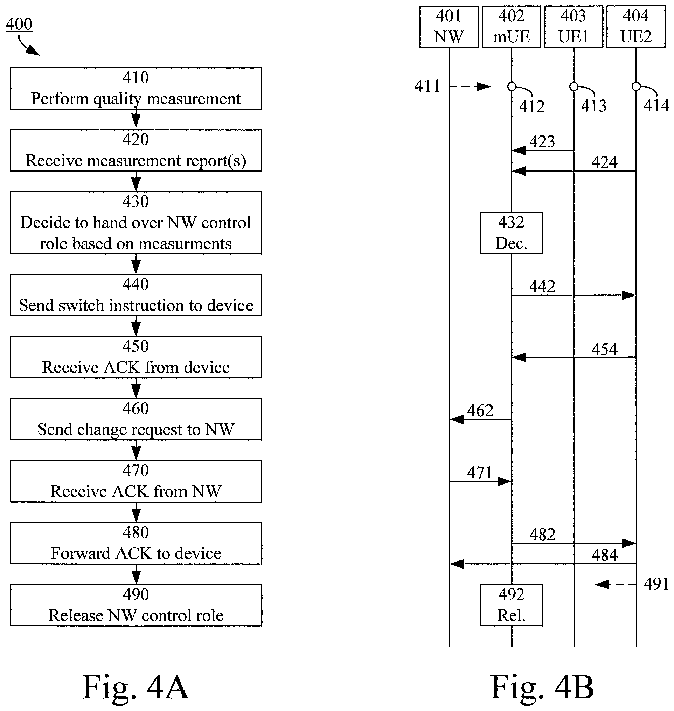

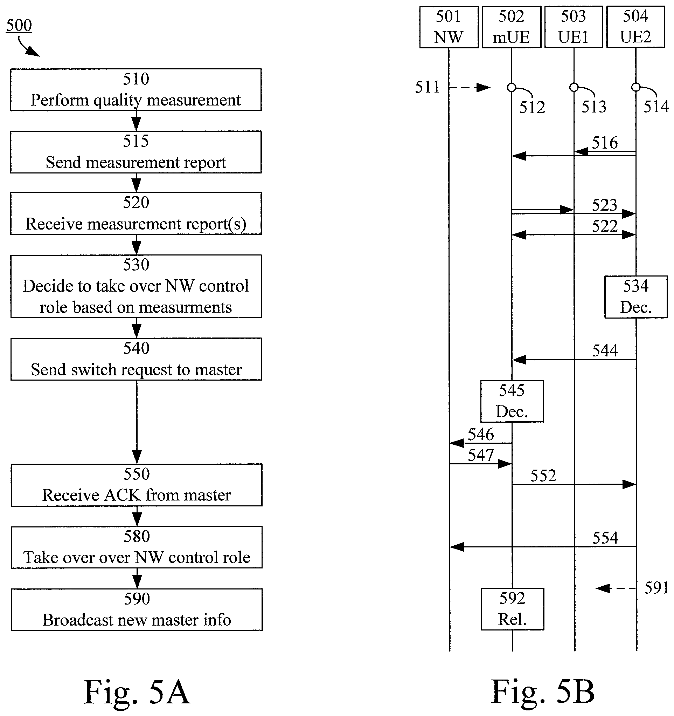

The device performing the method 300 may be the device initially having the master role or it may be another device of the D2D cluster. These alternatives are referred to as the centralized decision version and the de-centralized decision version respectively. These cases will be exemplified in more detail in Figures 4 and 5 respectively.

Returning first to Figure 1, the nomenclature of the centralized and de-centralized cases will be illustrated.

In the centralized case, the device performing the method 300 is a first communication device which initially has the master role. The device that initially has the master role is, in the nomenclature of the disclosure, a specific device. Thus, in the centralized case, the first communication device and the specific device coincides, i.e. are one and the same, and would be represented by device 10 in Figure 1.

The D2D cluster comprises a plurality of communication devices, which would be represented by devices 10, 20, 30, 40 and 50 in Figure 1. The cluster comprises the first communication device 10 and one or more other communication devices, which would thus be represented by devices 20, 30, 40 and 50 in Figure 1.

Finally, in the centralized case the specific device 10 decides whether or not to hand over the master role to another device in the plurality of communication devices. Thus, the another device would be represented by one of the devices 20, 30, 40 and 50 in Figure 1. Which of these devices is to be selected as the another device depends on the decision criteria as mentioned, for example, in connection to step 330 of Figure 3.

In the de-centralized case, the device performing the method 300 is a first communication device which initially does not have the master role. The device that initially has the master role is, in the nomenclature of the disclosure, a specific device. Thus, in the de-centralized case, the specific device would be represented by device 10 in Figure 1, and the first communication device would be represented by any of the devices 20, 30, 40 and 50 in Figure 1, say device 40.

The D2D cluster comprises a plurality of communication devices, which would be represented by devices 10, 20, 30, 40 and 50 in Figure 1. The D2D cluster comprises the first communication device 40 and one or more other communication devices, including the specific device, which would thus be represented by devices 10, 20, 30 and 50 in Figure 1.

Finally, in the de-centralized case the first communication device, which coincides with, or is one and the same as, the another device in the plurality of communication devices, decides whether or not to take over the master role from the specific device 10. Thus, the another device would be represented by the same device 40 in Figure 1 as the first communication device.

Figure 4A illustrates an example method 400 of the centralized variant according to some embodiments. Figure 4B illustrates corresponding example signaling between the network (NW) 401, the communication device (mUE) 402 performing the method 400, in this case the first, specific device, initially having the master role, and two other devices, UE1 403 and UE2 404, of the D2D cluster.

The network sends a signal 411 that may be used by the communication devices of the D2D cluster to perform measurements 412, 413, 414. This is represented in step 410, where the first communication device performs quality measurements, corresponding to step 310 of Figure 3. The signal 411 may be any suitable signal, such as, for example, a synchronization signal or reference signal. As mentioned before, the measurements may, alternatively or additionally, comprise measurements of the D2D communication links within the D2D cluster. Thus, the signal 411 is optional in at least the embodiments where the measurements do not comprise measurements of the prospect communication links to the network node.

In step 420, the first communication device receives measurement reports from at least one of the one or more other communication devices, corresponding to step 320 of Figure 3, which is illustrated by signaling 423 and 424.

In this centralized version, the first communication device, in this case the initial master device, then makes a decision in step 430 whether or not to hand over the master role to another device, based on the measurements performed in step 410 and the reports received in step 420, which is illustrated by box 432, corresponding to step 330 of Figure 3.

If it is decided to not switch the master role the method returns to step 410. On the other hand, if it is decided to switch the master role to, say, device 404, the first communication device 402 sends a switch instruction (e.g. denoted gateway function switching instruction) in step 440 to device 404 as illustrated by signaling 442.

The device 404 sends a response to the switch instruction, as illustrated by signaling 454. The response can be either an acknowledgement (ACK) or a non-acknowledgement (NACK). If the response is a NACK, the method returns to step 410 or to step 430, where it may select another device, e.g. using similar considerations but excluding device 404. If the response is an ACK, received by the first communication device 402 in step 450, the first communication device 402 sends a master change request to the network 401 in step 460 as illustrated by signaling 462.

The network 401 sends a response to the master change request, as illustrated by signaling 471. The response can be either an acknowledgement (ACK) or a non-acknowledgement (NACK). If the response is a NACK, the method returns to step 410 or to step 430. If the response is an ACK, received by the first communication device 402 in step 470, the first communication device 402 forwards the ACK, in step 480, to the device 404 that is to take over the master role, as illustrated by signaling 482.

The device 404 takes over the master role and informs the network 401 thereof as is illustrated by signaling 484. The device 404 also informs, e.g. by broadcast, the other communication devices of the D2D cluster that it is the new master as is illustrated by an announcement signal 491. When the first communication device 402 gets this or other confirmation that the master role is taken over by the device 404, it releases the master role in step 490, as is also illustrated by box 492.

In the nomenclature presented for the centralized case in connection to Figure 1, device 402 would be the first communication device and the specific device and device 404 would be the another device. The plurality of communication devices would comprise devices 402, 403 and 404, and the one or more other communication devices would comprise devices 403 and 404.

Figure 5A illustrates an example method 500 of the de-centralized variant according to some embodiments. Figure 5B illustrates corresponding example signaling between the network (NW) 501, the communication device (mUE) 502, in this case the specific device, initially having the master role, and two other devices, UE1 503 and UE2 504, of the D2D cluster, wherein device 504 is the device performing the method 500, i.e. the first communication device).

The network sends a signal 511 which may be used by the communication devices of the D2D cluster to perform measurements 512, 513, 514. This is represented in step 510, where the first communication device performs quality measurements, corresponding to step 310 of Figure 3. The signal 511 may be any suitable signal, such as, for example, a synchronization signal or reference signal. As mentioned before, the measurements may, alternatively or additionally, comprise measurements of the D2D communication links within the D2D cluster. Thus, the signal 511 is optional in at least the embodiments where the measurements do not comprise measurements of the prospect communication links to the network node.

In step 515, the device 504 sends a measurement report to all or some of the one or more other communication devices in the D2D cluster, as illustrated by signaling 516.

In step 520, the first communication device receives measurement reports from at least one of the one or more other communication devices, corresponding to step 320 of Figure 3, which is illustrated by signaling 523 and 522.

In this de-centralized version, the first communication device, which is not the initial master device, then makes a decision in step 530 whether or not to take over the master role from the device 502, based on the measurements performed in step 510 and the reports received in step 520, which is illustrated by box 534, corresponding to step 330 of Figure 3.

If it is decided not to take over the master role the method returns to step 510. On the other hand, if it is decided to take over the master role, the first communication device 504 sends a switch request (e.g. denoted gateway function switching request) in step 540 to the master device 502 as illustrated by signaling 544.

The master device may confirm or reject the switch request as illustrated by box 545. If the request is rejected, a NACK is sent by device 502 to device 504 and the method returns to step 510. If the request is confirmed, the master device 502 sends a master change request to the network 501 as illustrated by signaling 546.

The network 501 sends a response to the master change request, as illustrated by signaling 547. The response can be either an acknowledgement (ACK) or a non-acknowledgement (NACK). If the response is a NACK, the method returns to step 510. If the response is an ACK, the master device 502 forwards the ACK to the first communication device 504 that is to take over the master role, as illustrated by signaling 552. The first communication device 504 receives the ACK in step 550.

The device 504 takes over the master role and informs the network 501 thereof in step 580 as is illustrated by signaling 554. In step 590 the device 504 also informs, e.g. by broadcast, the other communication devices of the D2D cluster that it is the new master as is illustrated by an announcement signal 591. When the device 502 gets this or other confirmation that the master role is taken over by the device 504, it releases the master role, as is illustrated by box 592.

In the nomenclature presented for the de-centralized case in connection with Figure 1, device 502 would be the specific device and device 504 would be the first communication device and the another device. The plurality of communication devices would comprise devices 502, 503 and 504, and the one or more other communication devices would comprise devices 502 and 503.

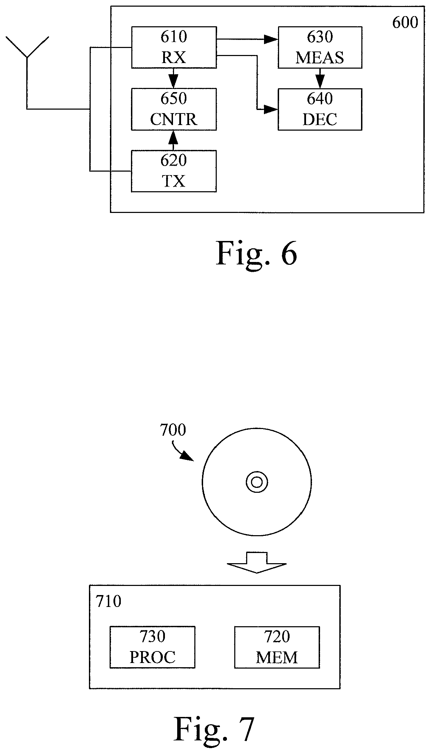

Figure 6 is a block diagram illustrating an example arrangement 600 according to some embodiments. The arrangement 600 may, for example, be adapted to perform any of the methods as described in connection to Figure 2, 3, 4A and 5A.

The arrangement comprises a receiver (RX) 610 and a transmitter (TX) 620 adapted to receive and transmit signals, e.g. control messages, reports, requests, instructions, responses, etc., as described herein.

The arrangement further comprises a measurement unit (MEAS) 630 and a decision unit (DEC) 640. The measurement unit 630 is adapted to perform measurements of communication links as described herein. The decision unit is adapted to decide whether or not to switch the master role, i.e. gateway function, as described herein.

A controller (CNTR) 650 is adapted to operate the control signaling within a device-to-device communication cluster when a communication device comprising the arrangement has a master role in the D2D cluster.

The described embodiments and their equivalents may be realized in software or hardware or a combination thereof. They may be performed by general-purpose circuits associated with or integral to a communication device, such as digital signal processors (DSP), central processing units (CPU), co-processor units, field-programmable gate arrays (FPGA) or other programmable hardware, or by specialized circuits such as for example application-specific integrated circuits (ASIC).

Embodiment may appear within an electronic apparatus, such as a wireless communication device or a user equipment (UE), comprising circuitry/logic or performing methods according to any of the embodiments. The electronic apparatus may, for example, be a portable or handheld mobile radio communication equipment, a mobile radio terminal, a mobile telephone, a communicator, an electronic organizer, a smartphone, a computer, a notebook, an embedded drive, or a mobile gaming device.

According to some embodiments, a computer program product comprises a computer readable medium such as, for example, a diskette or a CD-ROM as illustrated by 700 in Figure 7. The computer readable medium may have stored thereon a computer program comprising program instructions. The computer program may be loadable into a data-processing unit 730, which may, for example, be comprised in a mobile terminal 710. When loaded into the data-processing unit, the computer program may be stored in a memory 720 associated with or integral to the data-processing unit. According to some embodiments, the computer program may, when loaded into and run by the data-processing unit, cause the data-processing unit to execute method steps according to, for example, the methods shown in any of the Figures 2, 3, 4A and 5A.

Reference has been made herein to various embodiments. However, a person skilled in the art would recognize numerous variations to the described embodiments that would still fall within the scope of the claims. For example, the method embodiments described herein describes example methods through method steps being performed in a certain order. However, it is recognized that these sequences of events may take place in another order without departing from the scope of the claims. Furthermore, some method steps may be performed in parallel even though they have been described as being performed in sequence.

In the same manner, it should be noted that in the description of embodiments, the partition of functional blocks into particular units is by no means limiting. Contrarily, these partitions are merely examples. Functional blocks described herein as one unit may be split into two or more units. In the same manner, functional blocks that are described herein as being implemented as two or more units may be implemented as a single unit without departing from the scope of the claims.

Hence, it should be understood that the limitations of the described embodiments are merely for illustrative purpose and by no means limiting. Instead, all variations that fall within the range of the claims are intended to be embraced therein.

## Claims

1. A method for a first communication device adapted to perform cellular network assisted device-to-device communication, wherein a device-to-device communication cluster of a plurality of communication devices comprises the first communication device and one or more other communication devices, and wherein a specific one of the plurality of communication devices performs a network control signal gateway function for the device-to-device communication cluster, wherein the first communication device is the specific communication device, said network control signal gateway function comprising: receiving (210) device-to-device related downlink control signals for one or more of the plurality of communication devices in the device-to-device communication cluster from a network node of the cellular network, transmitting (210) device-to-device related uplink control signals from one or more of the plurality of communication devices in the device-to-device communication cluster to the network node of the cellular network, and operating (220) control signaling within the device-to-device communication cluster in association with the downlink and uplink control signals, the method comprising:
acquiring (310, 320, 410, 420) link quality measurements of the prospect communication links and of the device-to-device communication links by:
performing (310, 410) link quality measurements of the prospect communication link between the network node and the first communication device and of the device-to-device communication links between the first communication device and the one or more other communication devices; and
receiving (320, 420) a respective prospect communication link quality measurement report and a respective device-to-device communication links quality measurement report from at least one of the one or more other communication devices;
deciding (330, 430, 530) whether or not to switch the network control signal gateway function from the specific communication device to another communication device in the plurality of communication devices, based on at least one of:
link quality measurements of prospect communication links between the network node and the specific communication device and between the network node and the another communication device, wherein the link quality measurement of each prospect communication link comprises a prediction of a future quality of an existing communication link or a quality estimation of a communication link before link setup; and
link quality measurements of device-to-device communication links between the specific communication device and communication devices, other than the specific communication device, of the plurality of communication devices and between the another communication device and communication devices, other than the another communication device, of the plurality of communication devices,
wherein deciding whether or not to switch the network control signal gateway function from the specific communication device to the another communication device comprises deciding to switch the network control signal gateway function to the another communication device if the device-to-device communication links quality measurement report of the another communication device indicates that the another communication device has a device-to-device communication link to each communication device, other than the another communication device, of the plurality of communication devices of the communication cluster;
sending (460) a master change request to the network node; and
in response to receiving (470) an acknowledgement, ACK, response from the network node, forwarding (480) the ACK response to the another communication device.

2. The method of claim 1 further comprising transmitting (440, 480) a gateway function switching instruction to the another communication device.

3. A method for a first communication device adapted to perform cellular network assisted device-to-device communication, wherein a device-to-device communication cluster of a plurality of communication devices comprises the first communication device and one or more other communication devices, and wherein a specific one of the plurality of communication devices performs a network control signal gateway function for the device-to-device communication cluster, wherein the first communication device is the another communication device, said network control signal gateway function comprising: receiving (210) device-to-device related downlink control signals for one or more of the plurality of communication devices in the device-to-device communication cluster from a network node of the cellular network, transmitting (210) device-to-device related uplink control signals from one or more of the plurality of communication devices in the device-to-device communication cluster to the network node of the cellular network, and operating (220) control signaling within the device-to-device communication cluster in association with the downlink and uplink control signals, the method comprising:
acquiring (310, 320, 510, 520) link quality measurements of the prospect communication links and of the device-to-device communication links by:
performing (510, 510) a link quality measurement of the prospect communication link between the network node and the first communication device and of the device-to-device communication links between the first communication device and the one or more other communication devices; and
receiving (520, 520) a respective prospect communication link quality measurement report and a respective device-to-device communication links quality measurement report from at least one of the one or more other communication devices;
transmitting (515) a link quality measurement report to the one or more other communication devices, indicating a result of the link quality measurement of the prospect communication link between the network node and the first communication device;
deciding (330, 430, 530) whether or not to switch the network control signal gateway function from the specific communication device to another communication device in the plurality of communication devices, based on at least one of:
link quality measurements of prospect communication links between the network node and the specific communication device and between the network node and the another communication device, wherein the link quality measurement of each prospect communication link comprises a prediction of a future quality of an existing communication link or a quality estimation of a communication link before link setup; and
link quality measurements of device-to-device communication links between the specific communication device and communication devices, other than the specific communication device, of the plurality of communication devices and between the another communication device and communication devices, other than the another communication device, of the plurality of communication devices,
wherein deciding whether or not to switch the network control signal gateway function from the specific communication device to the another communication device comprises deciding to switch the network control signal gateway function to the another communication device if the device-to-device communication links quality measurement report of the another communication device indicates that the another communication device has a device-to-device communication link to each communication device, other than the another communication device, of the plurality of communication devices of the communication cluster;
transmitting (540) a gateway function switching request to the specific communication device; and
receiving an acknowledgement, ACK, response from the specific communication device wherein the ACK response is in turn received by the specific communication device from the network node as a response to a master change request from the specific communication device to the network node.

4. The method of any of claims 1 to 3 wherein deciding whether or not to switch the network control signal gateway function from the specific communication device to the another communication device further comprises deciding to switch the network control signal gateway function to the another communication device if the link quality measurement of the prospect communication link between the network node and the another communication device indicates an extreme value among the link quality measurements of prospect communication links, wherein the extreme value is a maximum value or a minimum value.

5. The method of any of claims 1 to 4 wherein deciding whether or not to switch the network control signal gateway function from the specific communication device to the another communication device is further based on an operational capability of the another communication device.

6. The method of claim 5 wherein the operational capability of the another communication device comprises one or more of a computational power and a user equipment capability of the another communication device.

7. The method of any of claims 1 to 6, wherein at least one of the link quality measurements of the prospect communication links between the network node and the communication devices, and the link quality measurements of device-to-device communication links between the communication devices comprises one or more of: a signal-to-noise ratio, a signal-to-interference ratio, a signal-to-noise-and-interference ratio, a bit error rate, a block error rate, a received signal strength indicator, a reference signal received power, and a reference signal received quality.

8. A computer program product comprising a computer readable medium (700), having thereon a computer program comprising program instructions, the computer program being loadable into a data-processing unit (730) and adapted to cause execution of the method according to any of claims 1 through 7 when the computer program is run by the data-processing unit.

9. An arrangement for a first communication device adapted to perform cellular network assisted device-to-device communication, wherein a device-to-device communication cluster of a plurality of communication devices comprises the first communication device and one or more other communication devices, and wherein a specific one of the plurality of communication devices performs a network control signal gateway function for the device-to-device communication cluster, wherein the first communication device is the specific communication device, said network control signal gateway function comprising: reception of device-to-device related downlink control signals for one or more of the plurality of communication devices in the device-to-device communication cluster from a network node of the cellular network, transmission of device-to-device related uplink control signals from one or more of the plurality of communication devices in the device-to-device communication cluster to the network node of the cellular network, and operation of control signaling within the device-to-device communication cluster in association with the downlink and uplink control signals, the arrangement comprising:
a measurement unit (630) adapted to perform a link quality measurement of a prospect communication link between the network node and the first communication device and of the device-to-device communication links between the first communication device and the one or more other communication devices;
a receiver (610) adapted to receive a respective link quality measurement report and a respective device-to-device communication links quality measurement report from at least one of the one or more other communication devices;
a decision unit (640) adapted to decide whether or not to switch the network control signal gateway function from the specific communication device to another communication device in the plurality of communication devices, based on at least one of:
link quality measurements of prospect communication links between the network node and the specific communication device and between the network node and the another communication device, wherein the link quality measurement of each prospect communication link comprises a prediction of a future quality of an existing communication link or a quality estimation of a communication link before link setup; and
link quality measurements of device-to-device communication links between the specific communication device and communication devices, other than the specific communication device, of the plurality of communication devices and between the another communication device and communication devices, other than the another communication device, of the plurality of communication devices,
wherein the decision unit is adapted to decide whether or not to switch the network control signal gateway function from the specific communication device to the another communication device by deciding to switch the network control signal gateway function to the another communication device if the device-to-device communication links quality measurement report of the another communication device indicates that the another communication device has a device-to-device communication link to each communication device, other than the another communication device, of the plurality of communication devices of the communication cluster; and
a transmitter (620) adapted to:
send a master change request to the network node; and
in response to reception of an acknowledgement, ACK, response from the network node, forward the ACK response to the another communication device.

10. The arrangement of claim 9, wherein the transmitter (620) is further adapted to transmit a gateway function switching instruction to the another communication device.

11. An arrangement for a first communication device adapted to perform cellular network assisted device-to-device communication, wherein a device-to-device communication cluster of a plurality of communication devices comprises the first communication device and one or more other communication devices, and wherein a specific one of the plurality of communication devices performs a network control signal gateway function for the device-to-device communication cluster, wherein the first communication device is the another communication device, said network control signal gateway function comprising: reception of device-to-device related downlink control signals for one or more of the plurality of communication devices in the device-to-device communication cluster from a network node of the cellular network, transmission of device-to-device related uplink control signals from one or more of the plurality of communication devices in the device-to-device communication cluster to the network node of the cellular network, and operation of control signaling within the device-to-device communication cluster in association with the downlink and uplink control signals, the arrangement comprising:
a measurement unit (630) adapted to perform a link quality measurement of a prospect communication link between the network node and the first communication device and of the device-to-device communication links between the first communication device and the one or more other communication devices;
a receiver (610) adapted to receive a respective link quality measurement report and a respective device-to-device communication links quality measurement report from at least one of the one or more other communication devices;
a transmitter (620) adapted to transmit a link quality measurement report to the one or more other communication devices, indicating a result of the link quality measurement of the prospect communication link between the network node and the first communication device; and
a decision unit (640) adapted to decide whether or not to switch the network control signal gateway function from the specific communication device to another communication device in the plurality of communication devices, based on at least one of:
link quality measurements of prospect communication links between the network node and the specific communication device and between the network node and the another communication device, wherein the link quality measurement of each prospect communication link comprises a prediction of a future quality of an existing communication link or a quality estimation of a communication link before link setup; and
link quality measurements of device-to-device communication links between the specific communication device and communication devices, other than the specific communication device, of the plurality of communication devices and between the another communication device and communication devices, other than the another communication device, of the plurality of communication devices,
wherein the decision unit is adapted to decide whether or not to switch the network control signal gateway function from the specific communication device to the another communication device by deciding to switch the network control signal gateway function to the another communication device if the device-to-device communication links quality measurement report of the another communication device indicates that the another communication device has a device-to-device communication link to each communication device, other than the another communication device, of the plurality of communication devices of the communication cluster;
wherein the transmitter is adapted to transmit a gateway function switching request to the specific communication device, and
wherein the receiver is adapted to receive an acknowledgement, ACK, response from the specific communication device, wherein the ACK response is in turn received by the specific communication device from the network node as a response to a master change request from the specific communication device to the network node.

12. A communication device comprising the arrangement according to any of claims 9 to 11.

## Patentansprüche

1. Verfahren für eine erste Kommunikationsvorrichtung, die zum Durchführen einer zellularen netzgestützten Kommunikation zwischen Vorrichtungen geeignet ist, wobei ein Kommunikationscluster zwischen Vorrichtungen aus einer Vielzahl von Kommunikationsvorrichtungen die erste Kommunikationsvorrichtung und eine oder mehrere andere Kommunikationsvorrichtungen umfasst, und wobei eine spezifische aus der Vielzahl von Kommunikationsvorrichtungen eine Netzsteuersignal-Gateway-Funktion für den Kommunikationscluster zwischen Vorrichtungen ausführt, wobei die erste Kommunikationsvorrichtung die spezifische Kommunikationsvorrichtung ist, wobei die Netzsteuersignal-Gateway-Funktion umfasst: Empfangen (210) von zwischen Vorrichtungen bezogenen Downlink-Steuersignalen für eine oder mehrere der Vielzahl von Kommunikationsvorrichtungen in dem Kommunikationscluster zwischen Vorrichtungen von einem Netzknoten des zellularen Netzes, Übertragen (210) von zwischen Vorrichtungen bezogenen Uplink-Steuersignalen von einer oder mehreren der Vielzahl von Kommunikationsvorrichtungen in dem Kommunikationscluster zwischen Vorrichtungen an den Netzknoten des zellularen Netzes und Betreiben (220) von Steuersignalen innerhalb des Kommunikationsclusters zwischen Vorrichtungen in Verbindung mit den Downlink- und Uplink-Steuersignalen, wobei das Verfahren umfasst:
Erfassen (310, 320, 410, 420) von Messungen der Verbindungsqualität der potenziellen Kommunikationsverbindungen und der Kommunikationsverbindungen zwischen Vorrichtungen durch: Durchführen (310, 410) von Verbindungsqualitätsmessungen der potenziellen Kommunikationsverbindung zwischen dem Netzknoten und der ersten Kommunikationsvorrichtung und den Kommunikationsverbindungen zwischen Vorrichtungen zwischen der ersten Kommunikationsvorrichtung und der einen oder mehreren anderen Kommunikationsvorrichtungen; und
Empfangen (320, 420) eines Qualitätsmessberichts für eine potenzielle Kommunikationsverbindung und eines Qualitätsmessberichts für entsprechende Kommunikationsverbindungen zwischen Vorrichtungen von mindestens einer der einen oder mehreren anderen Kommunikationsvorrichtungen;
Entscheiden (330, 430, 530), ob die Netzsteuersignal-Gateway-Funktion von der spezifischen Kommunikationsvorrichtung zu einer anderen Kommunikationsvorrichtung in der Vielzahl von Kommunikationsvorrichtungen umzuschalten ist oder nicht, basierend auf zumindest einem von Folgendem:
Verbindungsqualitätsmessungen von potenziellen Kommunikationsverbindungen zwischen dem Netzknoten und der spezifischen Kommunikationsvorrichtung und zwischen dem Netzknoten und der anderen Kommunikationsvorrichtung, wobei die Verbindungsqualitätsmessung jeder potenziellen Kommunikationsverbindung eine Vorhersage einer zukünftigen Qualität einer bestehenden Kommunikationsverbindung oder eine Qualitätsschätzung einer Kommunikationsverbindung vor Verbindungsaufbau umfasst; und
Verbindungsqualitätsmessungen von Kommunikationsverbindungen zwischen Vorrichtungen zwischen der spezifischen Kommunikationsvorrichtung und anderen Kommunikationsvorrichtungen als der spezifischen Kommunikationsvorrichtung der Vielzahl von Kommunikationsvorrichtungen und zwischen der anderen Kommunikationsvorrichtung und anderen Kommunikationsvorrichtungen als der anderen Kommunikationsvorrichtung der Vielzahl von Kommunikationsvorrichtungen,
wobei das Entscheiden, ob die Netzsteuersignal-Gatewayfunktion von der spezifischen Kommunikationsvorrichtung auf die andere Kommunikationsvorrichtung umgeschaltet werden soll oder nicht, das Entscheiden umfasst, die Netzsteuersignal-Gatewayfunktion auf die andere Kommunikationsvorrichtung umzuschalten, wenn der Qualitätsmessbericht der Kommunikationsverbindungen zwischen Vorrichtungen der anderen Kommunikationsvorrichtung angibt, dass die andere Kommunikationsvorrichtung eine Kommunikationsverbindung zwischen Vorrichtungen zu jeder Kommunikationsvorrichtung aufweist, die nicht die andere Kommunikationsvorrichtung ist, aus der Vielzahl von Kommunikationsvorrichtungen des Kommunikationsclusters;
Senden (460) einer Master-Änderungsanforderung an den Netzknoten; und
als Reaktion auf das Empfangen (470) einer Bestätigungs-Antwort, ACK-Antwort, vom Netzknoten, Weiterleiten (480) der ACK-Antwort an die andere Kommunikationsvorrichtung.

2. Verfahren nach Anspruch 1, ferner umfassend Übertragen (440, 480) einer Gateway-Funktions-Umschaltanweisung an die andere Kommunikationsvorrichtung.

3. Verfahren für eine erste Kommunikationsvorrichtung, die zum Durchführen einer zellularen netzgestützten Kommunikation zwischen Vorrichtungen geeignet ist, wobei ein Kommunikationscluster zwischen Vorrichtungen aus einer Vielzahl von Kommunikationsvorrichtungen die erste Kommunikationsvorrichtung und eine oder mehrere andere Kommunikationsvorrichtungen umfasst, und wobei eine spezifische aus der Vielzahl von Kommunikationsvorrichtungen eine Netzsteuersignal-Gateway-Funktion für den Kommunikationscluster zwischen Vorrichtungen ausführt, wobei die erste Kommunikationsvorrichtung die andere Kommunikationsvorrichtung ist, wobei die Netzsteuersignal-Gateway-Funktion umfasst: Empfangen (210) von zwischen Vorrichtungen bezogenen Downlink-Steuersignalen für eine oder mehrere der Vielzahl von Kommunikationsvorrichtungen in dem Downlink-Kommunikationscluster zwischen Vorrichtungen von einem Netzknoten des zellularen Netzes, Übertragen (210) von zwischen Vorrichtungen bezogenen Uplink-Steuersignalen von einer oder mehreren der Vielzahl von Kommunikationsvorrichtungen in dem Uplink-Kommunikationscluster zwischen Vorrichtungen an den Netzknoten des zellularen Netzes und Betreiben (220) von Steuersignalen innerhalb des Kommunikationsclusters zwischen Vorrichtungen in Verbindung mit den Downlink- und Uplink-Steuersignalen, wobei das Verfahren umfasst:
Erfassen (310, 320, 510, 520) von Messungen der Verbindungsqualität der potenziellen Kommunikationsverbindungen und der Kommunikationsverbindungen zwischen Vorrichtungen durch: Durchführen (510, 510) einer Verbindungsqualitätsmessung der potenziellen Kommunikationsverbindung zwischen dem Netzknoten und der ersten Kommunikationsvorrichtung und der Kommunikationsverbindungen zwischen Vorrichtungen zwischen der ersten Kommunikationsvorrichtung und der einen oder mehreren anderen Kommunikationsvorrichtungen; und
Empfangen (520, 520) eines Qualitätsmessberichts für eine potenzielle Kommunikationsverbindung und eines Qualitätsmessberichts für entsprechende Kommunikationsverbindungen zwischen Vorrichtungen von mindestens einer der einen oder mehreren anderen Kommunikationsvorrichtungen;
Übertragen (515) eines Verbindungsqualitätsmessberichts an die eine oder die mehreren anderen Kommunikationsvorrichtungen, der ein Ergebnis der Verbindungsqualitätsmessung der potenziellen Kommunikationsverbindung zwischen dem Netzknoten und der ersten Kommunikationsvorrichtung angibt;
Entscheiden (330, 430, 530), ob die Netzsteuersignal-Gateway-Funktion von der spezifischen Kommunikationsvorrichtung zu einer anderen Kommunikationsvorrichtung in der Vielzahl von Kommunikationsvorrichtungen umzuschalten ist oder nicht, basierend auf zumindest einem von Folgendem:
Verbindungsqualitätsmessungen von potenziellen Kommunikationsverbindungen zwischen dem Netzknoten und der spezifischen Kommunikationsvorrichtung und zwischen dem Netzknoten und der anderen Kommunikationsvorrichtung, wobei die Verbindungsqualitätsmessung jeder potenziellen Kommunikationsverbindung eine Vorhersage einer zukünftigen Qualität einer bestehenden Kommunikationsverbindung oder eine Qualitätsschätzung einer Kommunikationsverbindung vor Verbindungsaufbau umfasst; und
Verbindungsqualitätsmessungen von Kommunikationsverbindungen zwischen Vorrichtungen zwischen der spezifischen Kommunikationsvorrichtung und anderen Kommunikationsvorrichtungen als der spezifischen Kommunikationsvorrichtung der Vielzahl von Kommunikationsvorrichtungen und zwischen der anderen Kommunikationsvorrichtung und anderen Kommunikationsvorrichtungen als der anderen Kommunikationsvorrichtung der Vielzahl von Kommunikationsvorrichtungen,
wobei das Entscheiden, ob die Netzsteuersignal-Gatewayfunktion von der spezifischen Kommunikationsvorrichtung auf die andere Kommunikationsvorrichtung umgeschaltet werden soll oder nicht, das Entscheiden umfasst, die Netzsteuersignal-Gatewayfunktion auf die andere Kommunikationsvorrichtung umzuschalten, wenn der Qualitätsmessbericht der Kommunikationsverbindungen zwischen Vorrichtungen der anderen Kommunikationsvorrichtung angibt, dass die andere Kommunikationsvorrichtung eine Kommunikationsverbindung zwischen Vorrichtungen zu jeder Kommunikationsvorrichtung aufweist, die nicht die andere Kommunikationsvorrichtung ist, aus der Vielzahl von Kommunikationsvorrichtungen des Kommunikationsclusters;
Übertragen (540) einer Gateway-Funktions-Umschaltanforderung an die spezifische Kommunikationsvorrichtung; und
und Empfangen einer Bestätigungs-Antwort, ACK-Antwort von der spezifischen Kommunikationsvorrichtung, wobei die ACK-Antwort wiederum von der spezifischen Kommunikationsvorrichtung von dem Netzknoten als Antwort auf eine Master-Änderungsanforderung von der spezifischen Kommunikationsvorrichtung an den Netzknoten empfangen wird.

4. Verfahren nach einem der Ansprüche 1 bis 3, wobei das Entscheiden, ob die Netzsteuersignal-Gateway-Funktion von der spezifischen Kommunikationsvorrichtung zu der anderen Kommunikationsvorrichtung zu schalten ist oder nicht, ferner das Entscheiden umfasst, die Netzsteuersignal-Gateway-Funktion zu der anderen Kommunikationsvorrichtung umzuschalten, wenn die Verbindungsqualitätsmessung der potenziellen Kommunikationsverbindung zwischen dem Netzknoten und der anderen Kommunikationsvorrichtung einen Extremwert unter den Verbindungsqualitätsmessungen von potenziellen Kommunikationsverbindungen angibt, wobei der Extremwert ein Maximalwert oder ein Minimalwert ist.

5. Verfahren nach einem der Ansprüche 1 bis 4, wobei das Entscheiden, ob die Netzsteuersignal-Gateway-Funktion von der spezifischen Kommunikationsvorrichtung zu der anderen Kommunikationsvorrichtung umzuschalten ist oder nicht, ferner auf einer Betriebsfähigkeit der anderen Kommunikationsvorrichtung basiert.

6. Verfahren nach Anspruch 5, wobei die Betriebsfähigkeit der anderen Kommunikationsvorrichtung eine oder mehrere von einer Rechenleistung und einer Benutzereinrichtungsfähigkeit der anderen Kommunikationsvorrichtung umfasst.

7. Verfahren nach einem der Ansprüche 1 bis 6, wobei mindestens eine der Verbindungsqualitätsmessungen der potenziellen Kommunikationsverbindungen zwischen dem Netzknoten und den Kommunikationsgeräten und die Verbindungsqualitätsmessungen von Kommunikationsverbindungen zwischen Vorrichtungen zwischen den Kommunikationsvorrichtungen eines oder mehrere von Folgendem umfassen: ein Signal-Rausch-Verhältnis, ein Signal-Interferenz-Verhältnis, ein Signal-Rausch-Interferenz-Verhältnis, eine Bitfehlerrate, eine Blockfehlerrate, eine Empfangssignalstärkeanzeige, eine Referenzsignalempfangsleistung und eine Referenzsignalempfangsqualität.

8. Computerprogrammprodukt mit einem computerlesbaren Medium (700), auf dem ein Computerprogramm mit Programmanweisungen gespeichert ist, wobei das Computerprogramm in eine Datenverarbeitungseinheit (730) ladbar und angepasst ist, die Ausführung des Verfahrens nach einem der Ansprüche 1 bis 7 zu bewirken, wenn das Computerprogramm von der Datenverarbeitungseinheit ausgeführt wird.

9. Anordnung für eine erste Kommunikationsvorrichtung, die zum Durchführen einer zellularen netzgestützten Kommunikation zwischen Vorrichtungen geeignet ist, wobei ein Kommunikationscluster zwischen Vorrichtungen aus einer Vielzahl von Kommunikationsvorrichtungen die erste Kommunikationsvorrichtung und eine oder mehrere andere Kommunikationsvorrichtungen umfasst, und wobei eine spezifische aus der Vielzahl von Kommunikationsvorrichtungen eine Netzsteuersignal-Gateway-Funktion für den Kommunikationscluster zwischen Vorrichtungen ausführt, wobei die erste Kommunikationsvorrichtung die spezifische Kommunikationsvorrichtung ist, wobei die Netzsteuersignal-Gateway-Funktion umfasst: Empfang von zwischen Vorrichtungen bezogenen Downlink-Steuersignalen für eine oder mehrere der Vielzahl von Kommunikationsvorrichtungen in dem Downlink-Kommunikationscluster zwischen Vorrichtungen von einem Netzknoten des zellularen Netzes, Übertragung von zwischen Vorrichtungen bezogenen Uplink-Steuersignalen von einer oder mehreren der Vielzahl von Kommunikationsvorrichtungen in dem Uplink-Kommunikationscluster zwischen Vorrichtungen an den Netzknoten des zellularen Netzes und Betreiben von Steuersignalen innerhalb des Kommunikationsclusters zwischen Vorrichtungen in Verbindung mit den Downlink und Uplink-Steuersignalen, wobei die Anordnung umfasst:
eine Messeinheit (630), die angepasst ist, um eine Verbindungsqualitätsmessung einer potenziellen Kommunikationsverbindung zwischen dem Netzknoten und der ersten Kommunikationsvorrichtung und der Kommunikationsverbindungen zwischen Vorrichtungen zwischen der ersten Kommunikationsvorrichtung und der einen oder mehreren anderen Kommunikationsvorrichtungen durchzuführen;
einen Empfänger (610), der angepasst ist, um einen jeweiligen Verbindungsqualitäts-Messbericht und einen jeweiligen Messbericht zur Kommunikationsverbindungsqualität zwischen Vorrichtungen von mindestens einer der einen oder mehreren anderen Kommunikationsvorrichtungen zu empfangen;
eine Entscheidungseinheit (640), die angepasst ist, zu entscheiden, ob die Netzsteuersignal-Gateway-Funktion von der spezifischen Kommunikationsvorrichtung zu einer anderen Kommunikationsvorrichtung in der Vielzahl von Kommunikationsvorrichtungen umzuschalten ist oder nicht, basierend auf zumindest einem von Folgendem:
Verbindungsqualitätsmessungen von potenziellen Kommunikationsverbindungen zwischen dem Netzknoten und der spezifischen Kommunikationsvorrichtung und zwischen dem Netzknoten und der anderen Kommunikationsvorrichtung, wobei die Verbindungsqualitätsmessung jeder potenziellen Kommunikationsverbindung eine Vorhersage einer zukünftigen Qualität einer bestehenden Kommunikationsverbindung oder eine Qualitätsschätzung einer Kommunikationsverbindung vor Verbindungsaufbau umfasst; und
Verbindungsqualitätsmessungen von Kommunikationsverbindungen zwischen Vorrichtungen zwischen der spezifischen Kommunikationsvorrichtung und anderen Kommunikationsvorrichtungen als der spezifischen Kommunikationsvorrichtung der Vielzahl von Kommunikationsvorrichtungen und zwischen der anderen Kommunikationsvorrichtung und anderen Kommunikationsvorrichtungen als der anderen Kommunikationsvorrichtung der Vielzahl von Kommunikationsvorrichtungen,
wobei die Entscheidungseinheit angepasst ist, um zu entscheiden, ob die Netzsteuersignal-Gatewayfunktion von der spezifischen Kommunikationsvorrichtung auf die andere Kommunikationsvorrichtung umgeschaltet werden soll oder nicht, durch Entscheiden, die Netzsteuersignal-Gatewayfunktion auf die andere Kommunikationsvorrichtung umzuschalten, wenn der Qualitätsmessbericht der Kommunikationsverbindungen zwischen Vorrichtungen der anderen Kommunikationsvorrichtung angibt, dass die andere Kommunikationsvorrichtung eine Kommunikationsverbindung zwischen Vorrichtungen zu jeder Kommunikationsvorrichtung aufweist, die nicht die andere Kommunikationsvorrichtung ist, aus der Vielzahl von Kommunikationsvorrichtungen des Kommunikationsclusters; und
einen Sender (620), der angepasst ist, um:
eine Master-Änderungsanforderung an den Netzknoten zu senden; und als Reaktion auf den Empfang einer Bestätigungs-Antwort, ACK-Antwort vom Netzknoten, Weiterleiten der ACK-Antwort an die andere Kommunikationsvorrichtung.

10. Anordnung nach Anspruch 9, wobei der Sender (620) ferner angepasst ist, um eine Gateway-Funktions-Umschaltanweisung an die andere Kommunikationsvorrichtung zu senden.

11. Anordnung für eine erste Kommunikationsvorrichtung, die zum Durchführen einer zellularen netzgestützten Kommunikation zwischen Vorrichtungen geeignet ist, wobei ein Kommunikationscluster zwischen Vorrichtungen aus einer Vielzahl von Kommunikationsvorrichtungen die erste Kommunikationsvorrichtung und eine oder mehrere andere Kommunikationsvorrichtungen umfasst, und wobei eine spezifische aus der Vielzahl von Kommunikationsvorrichtungen eine Netzsteuersignal-Gateway-Funktion für den Kommunikationscluster zwischen Vorrichtungen ausführt, wobei die erste Kommunikationsvorrichtung die andere Kommunikationsvorrichtung ist, wobei die Netzsteuersignal-Gateway-Funktion umfasst: Empfang von zwischen Vorrichtungen bezogenen Downlink-Steuersignalen für eine oder mehrere der Vielzahl von Kommunikationsvorrichtungen in dem Downlink-Kommunikationscluster zwischen Vorrichtungen von einem Netzknoten des zellularen Netzes, Übertragung von zwischen Vorrichtungen bezogenen Uplink-Steuersignalen von einer oder mehreren der Vielzahl von Kommunikationsvorrichtungen in dem Uplink-Kommunikationscluster zwischen Vorrichtungen an den Netzknoten des zellularen Netzes und Betreiben von Steuersignalen innerhalb des Kommunikationsclusters zwischen Vorrichtungen in Verbindung mit den Downlink und Uplink-Steuersignalen, wobei die Anordnung umfasst:
eine Messeinheit (630), die angepasst ist, um eine Verbindungsqualitätsmessung einer potenziellen Kommunikationsverbindung zwischen dem Netzknoten und der ersten Kommunikationsvorrichtung und der Kommunikationsverbindungen zwischen Vorrichtungen zwischen der ersten Kommunikationsvorrichtung und der einen oder mehreren anderen Kommunikationsvorrichtungen durchzuführen;
einen Empfänger (610), der angepasst ist, um einen jeweiligen Verbindungsqualitäts-Messbericht und einen jeweiligen Messbericht zur Kommunikationsverbindungsqualität zwischen Vorrichtungen von mindestens einer der einen oder mehreren anderen Kommunikationsvorrichtungen zu empfangen;
einen Sender (620), der angepasst ist, einen Verbindungsqualitätsmessbericht an die eine oder die mehreren anderen Kommunikationsvorrichtungen zu übertragen, der ein Ergebnis der Verbindungsqualitätsmessung der potenziellen Kommunikationsverbindung zwischen dem Netzknoten und der ersten Kommunikationsvorrichtung angibt; und
eine Entscheidungseinheit (640), die angepasst ist, zu entscheiden, ob die Netzsteuersignal-Gateway-Funktion von der spezifischen Kommunikationsvorrichtung zu einer anderen Kommunikationsvorrichtung in der Vielzahl von Kommunikationsvorrichtungen umzuschalten ist oder nicht, basierend auf zumindest einem von Folgendem:
Verbindungsqualitätsmessungen von potenziellen Kommunikationsverbindungen zwischen dem Netzknoten und der spezifischen Kommunikationsvorrichtung und zwischen dem Netzknoten und der anderen Kommunikationsvorrichtung, wobei die Verbindungsqualitätsmessung jeder potenziellen Kommunikationsverbindung eine Vorhersage einer zukünftigen Qualität einer bestehenden Kommunikationsverbindung oder eine Qualitätsschätzung einer Kommunikationsverbindung vor Verbindungsaufbau umfasst; und
Verbindungsqualitätsmessungen von Kommunikationsverbindungen zwischen Vorrichtungen zwischen der spezifischen Kommunikationsvorrichtung und anderen Kommunikationsvorrichtungen als der spezifischen Kommunikationsvorrichtung der Vielzahl von Kommunikationsvorrichtungen und zwischen der anderen Kommunikationsvorrichtung und anderen Kommunikationsvorrichtungen als der anderen Kommunikationsvorrichtung der Vielzahl von Kommunikationsvorrichtungen,
wobei die Entscheidungseinheit angepasst ist, um zu entscheiden, ob die Netzsteuersignal-Gatewayfunktion von der spezifischen Kommunikationsvorrichtung auf die andere Kommunikationsvorrichtung umgeschaltet werden soll oder nicht, durch Entscheiden, die Netzsteuersignal-Gatewayfunktion auf die andere Kommunikationsvorrichtung umzuschalten, wenn der Qualitätsmessbericht der Kommunikationsverbindungen zwischen Vorrichtungen der anderen Kommunikationsvorrichtung angibt, dass die andere Kommunikationsvorrichtung eine Kommunikationsverbindung zwischen Vorrichtungen zu jeder Kommunikationsvorrichtung aufweist, die nicht die andere Kommunikationsvorrichtung ist, aus der Vielzahl von Kommunikationsvorrichtungen des Kommunikationsclusters;
wobei der Sender angepasst ist, eine Gateway-Funktions-Umschaltanforderung an die spezifische Kommunikationsvorrichtung zu übertragen, und
wobei der Sender angepasst ist, eine Bestätigungs-Antwort, ACK-Antwort, von der spezifischen Kommunikationsvorrichtung zu empfangen, wobei die ACK-Antwort wiederum von der spezifischen Kommunikationsvorrichtung von dem Netzknoten als Antwort auf eine Master-Änderungsanforderung von der spezifischen Kommunikationsvorrichtung an den Netzknoten empfangen wird.

12. Kommunikationsvorrichtung, die die Anordnung nach einem der Ansprüche 9 bis 11 umfasst.

## Revendications

1. Procédé pour un premier dispositif de communication conçu pour mettre en oeuvre une communication de dispositif à dispositif assistée par réseau cellulaire, dans lequel un bloc de communication de dispositif à dispositif d'une pluralité de dispositifs de communication comprend le premier dispositif de communication et un ou plusieurs autres dispositifs de communication, et dans lequel un dispositif spécifique parmi la pluralité de dispositifs de communication met en oeuvre une fonction de passerelle de signal de commande de réseau pour le bloc de communication de dispositif à dispositif, dans lequel le premier dispositif de communication est le dispositif de communication spécifique, ladite fonction de passerelle de signal de commande de réseau comprenant : la réception (210) de signaux de commande de liaison descendante en rapport avec le dispositif à dispositif pour un ou plusieurs parmi la pluralité de dispositifs de communication dans le bloc de communication de dispositif à dispositif depuis un noeud de réseau du réseau cellulaire, la transmission (210) de signaux de commande de liaison montante en rapport avec le dispositif à dispositif depuis un ou plusieurs parmi la pluralité de dispositifs de communication dans le bloc de communication de dispositif à dispositif vers le noeud de réseau du réseau cellulaire, et l'utilisation (220) d'une signalisation de commande au sein du bloc de communication de dispositif à dispositif en association avec les signaux de commande de liaison descendante et de liaison montante, le procédé comprenant : l'acquisition (310, 320, 410, 420) de mesures de qualité de liaison des liaisons de communication probables et des liaisons de communication de dispositif à dispositif par :
la mise en oeuvre (310, 410) de mesures de qualité de liaison de la liaison de communication probable entre le noeud de réseau et le premier dispositif de communication et des liaisons de communication de dispositif à dispositif entre le premier dispositif de communication et le ou les autres dispositifs de communication ; et
la réception (320, 420) d'un rapport de mesure de qualité de liaison de communication probable respectif et d'un rapport de mesure de qualité de liaisons de communication de dispositif à dispositif respectif depuis au moins l'un parmi le ou les autres dispositifs de communication ;
le fait de décider (330, 430, 530) s'il faut ou non commuter la fonction de passerelle de signal de commande de réseau depuis le dispositif de communication spécifique vers un autre dispositif de communication dans la pluralité de dispositifs de communication, sur la base d'au moins l'une parmi :
des mesures de qualité de liaison de liaisons de communication probables entre le noeud de réseau et le dispositif de communication spécifique et entre le noeud de réseau et l'autre dispositif de communication, dans lequel la mesure de qualité de liaison de chaque liaison de communication probable comprend une prévision d'une qualité future d'une liaison de communication existante ou une estimation de qualité d'une liaison de communication avant configuration de liaison ; et
des mesures de qualité de liaison de liaisons de communication de dispositif à dispositif entre le dispositif de communication spécifique et des dispositifs de communication, autres que le dispositif de communication spécifique, de la pluralité de dispositifs de communication et entre l'autre dispositif de communication et des dispositifs de communication, autres que l'autre dispositif de communication, de la pluralité de dispositifs de communication,
dans lequel le fait de décider s'il faut ou non commuter la fonction de passerelle de signal de commande de réseau depuis le dispositif de communication spécifique vers l'autre dispositif de communication comprend le fait de décider de commuter la fonction de passerelle de signal de commande de réseau vers l'autre dispositif de communication si le rapport de mesure de qualité de liaisons de communication de dispositif à dispositif de l'autre dispositif de communication indique que l'autre dispositif de communication a une liaison de communication de dispositif à dispositif vers chaque dispositif de communication, autre que l'autre dispositif de communication, de la pluralité de dispositifs de communication du bloc de communication ;
l'envoi (460) d'une demande de changement maître au noeud de réseau ; et
en réponse à la réception (470) d'une réponse d'accusé de réception, ACK, depuis le noeud de réseau, le transfert (480) de la réponse ACK à l'autre dispositif de communication.

2. Procédé selon la revendication 1, comprenant en outre la transmission (440, 480) d'une instruction de commutation de fonction de passerelle à l'autre dispositif de communication.

3. Procédé pour un premier dispositif de communication conçu pour mettre en oeuvre une communication de dispositif à dispositif assistée par réseau cellulaire, dans lequel un bloc de communication de dispositif à dispositif d'une pluralité de dispositifs de communication comprend le premier dispositif de communication et un ou plusieurs autres dispositifs de communication, et dans lequel un dispositif spécifique parmi la pluralité de dispositifs de communication met en oeuvre une fonction de passerelle de signal de commande de réseau pour le bloc de communication de dispositif à dispositif, dans lequel le premier dispositif de communication est l'autre dispositif de communication, ladite fonction de passerelle de signal de commande de réseau comprenant : la réception (210) de signaux de commande de liaison descendante en rapport avec le dispositif à dispositif pour un ou plusieurs parmi la pluralité de dispositifs de communication dans le bloc de communication de dispositif à dispositif depuis un noeud de réseau du réseau cellulaire, la transmission (210) de signaux de commande de liaison montante en rapport avec le dispositif à dispositif depuis un ou plusieurs parmi la pluralité de dispositifs de communication dans le bloc de communication de dispositif à dispositif vers le noeud de réseau du réseau cellulaire, et l'utilisation (220) d'une signalisation de commande au sein du bloc de communication de dispositif à dispositif en association avec les signaux de commande de liaison descendante et de liaison montante, le procédé comprenant : l'acquisition (310, 320, 510, 520) de mesures de qualité de liaison des liaisons de communication probables et des liaisons de communication de dispositif à dispositif par :
la mise en oeuvre (510, 510) d'une mesure de qualité de liaison de la liaison de communication probable entre le noeud de réseau et le premier dispositif de communication et des liaisons de communication de dispositif à dispositif entre le premier dispositif de communication et le ou les autres dispositifs de communication ; et
la réception (520, 520) d'un rapport de mesure de qualité de liaison de communication probable respectif et d'un rapport de mesure de qualité de liaisons de communication de dispositif à dispositif respectif depuis au moins l'un parmi le ou les autres dispositifs de communication ;
la transmission (515) d'un rapport de mesure de qualité de liaison vers le ou les autres dispositifs de communication, indiquant un résultat de la mesure de qualité de liaison de la liaison de communication probable entre le noeud de réseau et le premier dispositif de communication ;
le fait de décider (330, 430, 530) s'il faut ou non commuter la fonction de passerelle de signal de commande de réseau depuis le dispositif de communication spécifique vers un autre dispositif de communication dans la pluralité de dispositifs de communication, sur la base d'au moins l'une parmi :
des mesures de qualité de liaison de liaisons de communication probables entre le noeud de réseau et le dispositif de communication spécifique et entre le noeud de réseau et l'autre dispositif de communication, dans lequel la mesure de qualité de liaison de chaque liaison de communication probable comprend une prévision d'une qualité future d'une liaison de communication existante ou une estimation de qualité d'une liaison de communication avant configuration de liaison ; et
des mesures de qualité de liaison de liaisons de communication de dispositif à dispositif entre le dispositif de communication spécifique et des dispositifs de communication, autres que le dispositif de communication spécifique, de la pluralité de dispositifs de communication et entre l'autre dispositif de communication et des dispositifs de communication, autres que l'autre dispositif de communication, de la pluralité de dispositifs de communication,
dans lequel le fait de décider s'il faut ou non commuter la fonction de passerelle de signal de commande de réseau depuis le dispositif de communication spécifique vers l'autre dispositif de communication comprend le fait de décider de commuter la fonction de passerelle de signal de commande de réseau vers l'autre dispositif de communication si le rapport de mesure de qualité de liaisons de communication de dispositif à dispositif de l'autre dispositif de communication indique que l'autre dispositif de communication a une liaison de communication de dispositif à dispositif vers chaque dispositif de communication, autre que l'autre dispositif de communication, de la pluralité de dispositifs de communication du bloc de communication ;
la transmission (540) d'une demande de commutation de fonction de passerelle au dispositif de communication spécifique ; et
la réception d'une réponse d'accusé de réception, ACK, depuis le dispositif de communication spécifique dans lequel la réponse ACK est, à son tour, reçue par le dispositif de communication spécifique depuis le noeud de réseau en tant que réponse à une demande de changement maître depuis le dispositif de communication spécifique vers le noeud de réseau.

4. Procédé selon l'une quelconque des revendications 1 à 3, dans lequel le fait de décider s'il faut ou non commuter la fonction de passerelle de signal de commande de réseau depuis le dispositif de communication spécifique vers l'autre dispositif de communication comprend en outre le fait de décider de commuter la fonction de passerelle de signal de commande de réseau vers l'autre dispositif de communication si la mesure de qualité de liaison de la liaison de communication probable entre le noeud de réseau et l'autre dispositif de communication indique une valeur extrême parmi les mesures de qualité de liaison des liaisons de communication probables, dans lequel la valeur extrême est une valeur maximale ou une valeur minimale.

5. Procédé selon l'une quelconque des revendications 1 à 4, dans lequel le fait de décider s'il faut ou non commuter la fonction de passerelle de signal de commande de réseau depuis le dispositif de communication spécifique vers l'autre dispositif de communication est en outre basé sur une capacité opérationnelle de l'autre dispositif de communication.

6. Procédé selon la revendication 5, dans lequel la capacité opérationnelle de l'autre dispositif de communication comprend une ou plusieurs parmi une puissance de calcul et une capacité d'équipement utilisateur de l'autre dispositif de communication.

7. Procédé selon l'une quelconque des revendications 1 à 6, dans lequel au moins l'une des mesures de qualité de liaison des liaisons de communication probables entre le noeud de réseau et les dispositifs de communication, et des mesures de qualité de liaison de liaisons de communication de dispositif à dispositif entre les dispositifs de communication comprend un ou plusieurs parmi : un rapport signal-bruit, un rapport signal-interférence, un rapport signal-bruit-et-interférence, un taux d'erreur binaire, un taux d'erreur de bloc, un indicateur de force de signal reçu, une puissance reçue de signal de référence et une qualité reçue de signal de référence.

8. Produit programme informatique comprenant un support lisible par ordinateur (700), sur lequel se trouve un programme informatique comprenant des instructions de programme, le programme informatique pouvant être chargé dans une unité de traitement de données (730) et étant conçu pour amener une exécution du procédé selon l'une quelconque des revendications 1 à 7 lorsque le programme informatique est exécuté par l'unité de traitement de données.

9. Agencement pour un premier dispositif de communication conçu pour mettre en oeuvre une communication de dispositif à dispositif assistée par réseau cellulaire, dans lequel un bloc de communication de dispositif à dispositif d'une pluralité de dispositifs de communication comprend le premier dispositif de communication et un ou plusieurs autres dispositifs de communication, et dans lequel un dispositif spécifique parmi la pluralité de dispositifs de communication met en oeuvre une fonction de passerelle de signal de commande de réseau pour le bloc de communication de dispositif à dispositif, dans lequel le premier dispositif de communication est le dispositif de communication spécifique, ladite fonction de passerelle de signal de commande de réseau comprenant : la réception de signaux de commande de liaison descendante en rapport avec le dispositif à dispositif pour un ou plusieurs parmi la pluralité de dispositifs de communication dans le bloc de communication de dispositif à dispositif depuis un noeud de réseau du réseau cellulaire, la transmission des signaux de commande de liaison montante en rapport avec le dispositif à dispositif depuis un ou plusieurs parmi la pluralité de dispositifs de communication dans le bloc de communication de dispositif à dispositif vers le noeud de réseau du réseau cellulaire, et l'utilisation d'une signalisation de commande au sein du bloc de communication de dispositif à dispositif en association avec les signaux de commande de liaison descendante et de liaison montante, l'agencement comprenant :
une unité de mesure (630) conçue pour mettre en oeuvre une mesure de qualité de liaison d'une liaison de communication probable entre le noeud de réseau et le premier dispositif de communication et des liaisons de communication de dispositif à dispositif entre le premier dispositif de communication et le ou les autres dispositifs de communication ;
un récepteur (610) conçu pour recevoir un rapport de mesure de qualité de liaison respectif et un rapport de mesure de qualité de liaisons de communication de dispositif à dispositif respectif depuis au moins l'un parmi le ou les autres dispositifs de communication ;
une unité de décision (640) conçue pour décider s'il faut ou non commuter la fonction de passerelle de signal de commande de réseau depuis le dispositif de communication spécifique vers un autre dispositif de communication dans la pluralité de dispositifs de communication, sur la base d'au moins l'une parmi :
des mesures de qualité de liaison de liaisons de communication probables entre le noeud de réseau et le dispositif de communication spécifique et entre le noeud de réseau et l'autre dispositif de communication, dans lequel la mesure de qualité de liaison de chaque liaison de communication probable comprend une prévision d'une qualité future d'une liaison de communication existante ou une estimation de qualité d'une liaison de communication avant configuration de liaison ; et
des mesures de qualité de liaison de liaisons de communication de dispositif à dispositif entre le dispositif de communication spécifique et des dispositifs de communication, autres que le dispositif de communication spécifique, de la pluralité de dispositifs de communication et entre l'autre dispositif de communication et des dispositifs de communication, autres que l'autre dispositif de communication, de la pluralité de dispositifs de communication,
dans lequel l'unité de décision est conçue pour décider s'il faut ou non commuter la fonction de passerelle de signal de commande de réseau depuis le dispositif de communication spécifique vers l'autre dispositif de communication en décidant de commuter la fonction de passerelle de signal de commande de réseau vers l'autre dispositif de communication si le rapport de mesure de qualité de liaisons de communication de dispositif à dispositif de l'autre dispositif de communication indique que l'autre dispositif de communication a une liaison de communication de dispositif à dispositif vers chaque dispositif de communication, autre que l'autre dispositif de communication, de la pluralité de dispositifs de communication du bloc de communication ; et un émetteur (620) conçu pour :
envoyer une demande de changement maître au noeud de réseau ; et en réponse à la réception d'une réponse d'accusé de réception, ACK, depuis le noeud de réseau, transférer la réponse ACK vers l'autre dispositif de communication.

10. Agencement selon la revendication 9, dans lequel l'émetteur (620) est en outre conçu pour transmettre une instruction de commutation de fonction de passerelle à l'autre dispositif de communication.

11. Agencement pour un premier dispositif de communication conçu pour mettre en oeuvre une communication de dispositif à dispositif assistée par réseau cellulaire, dans lequel un bloc de communication de dispositif à dispositif d'une pluralité de dispositifs de communication comprend le premier dispositif de communication et un ou plusieurs autres dispositifs de communication, et dans lequel un dispositif spécifique parmi la pluralité de dispositifs de communication met en oeuvre une fonction de passerelle de signal de commande de réseau pour le bloc de communication de dispositif à dispositif, dans lequel le premier dispositif de communication est l'autre dispositif de communication, ladite fonction de passerelle de signal de commande de réseau comprenant : la réception de signaux de commande de liaison descendante en rapport avec le dispositif à dispositif pour un ou plusieurs parmi la pluralité de dispositifs de communication dans le bloc de communication de dispositif à dispositif depuis un noeud de réseau du réseau cellulaire, la transmission des signaux de commande de liaison montante en rapport avec le dispositif à dispositif depuis un ou plusieurs parmi la pluralité de dispositifs de communication dans le bloc de communication de dispositif à dispositif vers le noeud de réseau du réseau cellulaire, et l'utilisation d'une signalisation de commande au sein du bloc de communication de dispositif à dispositif en association avec les signaux de commande de liaison descendante et de liaison montante, l'agencement comprenant :
une unité de mesure (630) conçue pour mettre en oeuvre une mesure de qualité de liaison d'une liaison de communication probable entre le noeud de réseau et le premier dispositif de communication et des liaisons de communication de dispositif à dispositif entre le premier dispositif de communication et le ou les autres dispositifs de communication ;
un récepteur (610) conçu pour recevoir un rapport de mesure de qualité de liaison respectif et un rapport de mesure de qualité de liaisons de communication de dispositif à dispositif respectif depuis au moins l'un parmi le ou les autres dispositifs de communication ;
un émetteur (620) conçu pour transmettre un rapport de mesure de qualité de liaison vers le ou les autres dispositifs de communication, indiquant un résultat de la mesure de qualité de liaison de la liaison de communication probable entre le noeud de réseau et le premier dispositif de communication ; et
une unité de décision (640) conçue pour décider s'il faut ou non commuter la fonction de passerelle de signal de commande de réseau depuis le dispositif de communication spécifique vers un autre dispositif de communication dans la pluralité de dispositifs de communication, sur la base d'au moins l'une parmi :
des mesures de qualité de liaison de liaisons de communication probables entre le noeud de réseau et le dispositif de communication spécifique et entre le noeud de réseau et l'autre dispositif de communication, dans lequel la mesure de qualité de liaison de chaque liaison de communication probable comprend une prévision d'une qualité future d'une liaison de communication existante ou une estimation de qualité d'une liaison de communication avant configuration de liaison ; et
des mesures de qualité de liaison de liaisons de communication de dispositif à dispositif entre le dispositif de communication spécifique et des dispositifs de communication, autres que le dispositif de communication spécifique, de la pluralité de dispositifs de communication et entre l'autre dispositif de communication et des dispositifs de communication, autres que l'autre dispositif de communication, de la pluralité de dispositifs de communication,
dans lequel l'unité de décision est conçue pour décider s'il faut ou non commuter la fonction de passerelle de signal de commande de réseau depuis le dispositif de communication spécifique vers l'autre dispositif de communication en décidant de commuter la fonction de passerelle de signal de commande de réseau vers l'autre dispositif de communication si le rapport de mesure de qualité de liaisons de communication de dispositif à dispositif de l'autre dispositif de communication indique que l'autre dispositif de communication a une liaison de communication de dispositif à dispositif vers chaque dispositif de communication, autre que l'autre dispositif de communication, de la pluralité de dispositifs de communication du bloc de communication ;
dans lequel l'émetteur est conçu pour transmettre une demande de commutation de fonction de passerelle au dispositif de communication spécifique, et
dans lequel le récepteur est conçu pour recevoir une réponse d'accusé de réception, ACK, depuis le dispositif de communication spécifique dans lequel la réponse ACK est, à son tour, reçue par le dispositif de communication spécifique depuis le noeud de réseau en tant que réponse à une demande de changement maître depuis le dispositif de communication spécifique vers le noeud de réseau.

12. Dispositif de communication comprenant l'agencement selon l'une quelconque des revendications 9 à 11.
